# EUROPEAN PATENT SPECIFICATION

(11) **EP 0 427 517 B1**
(45) Date of publication and mention of the grant of the patent: **20.09.1995**
(21) Application number: 90312146.5
(22) Date of filing: 06.11.1990
(51) Int. Cl.: C02F 1/76, A01N 59/00

(54) **N-halogen oxidizer composition and N-halogen oxidizer containing a stable blue pigment**
N-Halogenoxydationszusammensetzung und blaues farbstabiles Pigment enthaltendes N-Halogenoxydationsmittel
Composition oxydante N-halogénée et oxydant N-halogéné qui contient un pigment bleu stable

(30) Priority: 06.11.1989 US 431824; 15.10.1990 US 596462
(43) Date of publication of application: 15.05.1991
(73) Proprietor: BIO-LAB, INC, Decatur, Georgia 30071-1489 (US)
(72) Inventor: Jones, Ronald L., Norcross, Georgia 30071 (US); Wynn, Marion W., Stone Mountain, Georgia 30083 (US)
(74) Representative: Couchman, Jonathan Hugh

(56) References cited:
- EP-A- 0 005 286
- EP-A- 0 206 718
- WO-A-90/00006
- US-A- 3 401 116
- US-A- 4 698 165

## Description

The invention relates to a composition that provides hypobromous acid for disinfecting water systems such as swimming pools, spas, decorative fountains, recirculating water cooling systems and health related baths. The invention relates also to adding a stable blue pigment to dry oxidizer compounds for disinfecting water systems such as swimming pools, spas, decorative fountains and recirculating water cooling systems.

A number of different compositions and methods that provide hypobromous acid for disinfecting water systems have been utilized. These technologies currently in use have some serious deficiencies. One of these technologies is a two part system utilizing two products. The first product is a bromide salt solution. The second product is an oxidizing agent containing potassium peroxymonosulfate. This technology is not very efficient and is difficult to use. The chemical must be hand fed. The need to provide a composition which overcomes these disadvantages has existed for some years.

Other technologies include blended compositions containing trichloro-s-triazinetrione (TCCA) and sodium bromide. These blends are normally pressed into a solid composition such as a stick, tablet or puck and are placed in an erosion feeder, skimmer, or floating slow release device. An example of this type is a blend containing 96% TCCA, 2% Sodium Bromide and 2% inert.

It is preferred to use the disinfectant in an erosion feeder, skimmer or a floating release device in order to slowly release the disinfectant into the water system in most applications. The sodium bromide and TCCA are compressed into either a stick, tablet or puck and used in one of the release feeder devices. However, these sticks, tablets or pucks do not maintain their integrity as water is circulated through the release device. Consequently the disinfectant splits, cracks, and breaks into small pieces. These small pieces expose more surface area and an increased rate of erosion occurs. The disinfectant is released too rapidly and is not satisfactory for the treatment of most water systems.

There are several commercial blends of sodium bromide and trichloro-s-triazinetrione available as disinfectants. There are also commercial products which use sodium bromide as the only active ingredient.

US Patent 4,557,926 (Nelson et al) discloses a combination of an alkali metal salt of dichloroisocyanuric acid and either sodium bromide or potassium bromide for use in disinfecting toilets. The use of a bromide salt to bleach and disinfect is disclosed in UK Patents 3,519,569 (Diaz), 3,575,865 (Burke et al), 3,580,833 (Koceich et al), 4,235,599 (Davis et al), 4,382,799 (Davis et al) and 4,600,406 (Corte).

In greater detail, bromo-hydantoins are disclosed in US Patent No 3,575,865 (Burke et al) for use as an oxidizing agent in a bleaching composition. N-bromo-N-chloro-hydantoin compounds are disclosed as being useful as a bleach activator in US Patent No 3, 850,833 (Koceich et al). This cleanser composition consists of a bleach activator, pigment extender, pigment and a particulate carrier. The bleach activator can be an alkali metal bromide. Various glycols are used for the pigment extender and binder. This patent mentions that pigments in the blue through green range may be used. However, only the phthalocyanine pigments, such as chromophthal green are disclosed. These compositions are prepared by mixing a particulate carrier with a bleach activator. The pigment is then added and a pigment extender then mixed with it. US Patent No 3,519,569 (Diaz) discloses an abrasive scouring cleanser containing a hypochlorite liberating compound with an abrasive material, organic detergent and an alkali metal bromide. The hydantoins are included in the class of hypochlorite-generating components. Other hypochlorite-generating compounds are the alkali metal hypochlorites, such as lithium and sodium hypochlorite. US Patent No 4,235,599 (Davis et al) discloses a bleaching composition consisting of a mixture of N, N-dichloro- substituted hydantoin compounds with sodium bromide. The use of N-brominated-hydantoin as bleaching agents is disclosed in US Patent No 4,382,799 (Davis et al). US Patent No 4,600,406 (Corte) discloses a process of bleaching using sodium bromide and sodium hypochlorite. Corte discloses the use of the chloro-hydantoins in his bleaching method.

There are in conclusion a number of oxidizing compounds that are satisfactory for disinfecting water systems. It would be desirable to be able to incorporate a blue pigment in these compounds so that they could be identified as a disinfectant. It would be necessary for the pigment to be stable when incorporated in dry form with the compound. As these oxidizer compounds are used for disinfecting other systems such as swimming pools and spas, it is preferred that the pigment not be stable in the water system. Otherwise it might stain the walls of the swimming pool and spa even though it is used in very small amounts.

It is an object of the present invention in one of its aspects to provide a solid composition which provides hypobromous acid for use in a slow release device for disinfecting water systems and which will dissolve at a relatively slow rate so that the disinfectant will be released uniformly into the water system over an extended period of time.

In one aspect, the invention accordingly provides a solid disinfectant that dissolves at a slow and relatively uniform rate when placed in a release device in a water system. The disinfectant is composed of from 80-99% trichloro-s-triazinetrione (TCCA) and from 1-20% potassium bromide. These two compounds are in solid form and can be mixed together and pressed into a stick, tablet or puck which is suitable for use in various types of release device such as erosion feeders, skimmers or floating release devices. Water circulates through the release device and gradually erodes the solid composition releasing hypobromous acid to serve as the disinfectant in the water system. It is preferred that from 90-97% TCCA and from 3-10% potassium bromide (KBr) be used in the composition.

Commercial solid formulations of sodium bromide and TCCA are known. The problem with these formulations is that they dissolve too rapidly in release devices as illustrated in the examples that follow. However, the combination of potassium bromide and TCCA dissolves at a much lower rate. Consequently the disinfectant of this invention adds disinfectant to a water system at a controlled and uniform rate over a long period of time.

The solid disinfectant of this invention is useful in disinfecting water systems such as swimming pools, spas, hot tubs and cooling towers. Its composition is normally pressed into tablets, sticks or pucks and placed in a release device such as an erosion feeder, skimmer, in-line halogenator or floating release device in the system.

It is a further object of this invention in a second aspect to add an oxidizer stable dye or pigment to a slowly dissolving solid disinfectant so that it can be distinguished from solid disinfectants that would otherwise be similar in appearance. A further object of this invention is for the dye or pigment to decompose in the water system so that the water is not coloured by the dye. This would be objectionable to users of the water system in many cases, particularly in the case of swimming pools, as it would stain the walls and bottom surfaces of the pool.

Finding a stable blue pigment is important as it clearly identifies the oxidizer as a disinfectant suitable for use in water systems.

It has been found according to a further aspect of the invention that the pigment lazurite can be added to the composition to color the solid disinfectant. This pigment is oxidizer stable and consequently does not decompose when added to the solid disinfectant, but is decomposed by the disinfectant in the water system so that the pigment will not color the water or stain hard surfaces such as swimming pool and spa walls. This pigment is added in an amount of .01-.5%. The amount of KBr or TCCA is accordingly reduced.

Lazurite or ultramarine blue is commonly sold under the trade name Pylam Pylaklor Dry Blue™ S-726 (Pigment Blue 29; CI 77007). It has the following composition: [(Na, Ca)₄ (AlSiO₄)₃ (SO₄, S, C1)] or [Ca₂Na₆ (Al₆(Sio₄)₆SO₄ S] or [Na₅ (Al₃(Sio₄)₃S] or [Na₅ (Al₃(Sio₄)₃ S) (Cl). This pigment is blue, blue-violet or greenish-blue in color. Lazurite is oxidizer stable so that the solid composition is blue in color. Lazurite is decomposed by the disinfectant in the water systems as illustrated in Example 3 Decomposition of the pigment in the water system is desirable because otherwise the pigment may result in a slight blue tint in the water. This is important for some applications as pigment might be objectionable to users of certain water systems such as swimming pools.

The lazurite is added to the solid disinfectant in an amount of from 0.01-.5% by weight. It is preferred that it be present in an amount of 0.05%-0.25% by weight. One of the preferred compositions includes the trichloro-s-triazinetrione in an amount from 90-97% by weight and potassium bromide in an amount from 2.99%-9.5% by weight and lazurite in an amount from .01-.5% by weight.

The lazurite is added to the disinfectant by simple mixing. The disinfectant and pigment can be in granular or a pressed composition.

The lazurite pigment gives a distinctive blue color to the white disinfectant compound which is stable for a long period of time. However when the pigmented disinfectant is introduced into the water system, the pigment becomes unstable so the water is not colored blue. This is preferred to avoid staining the walls of swimming pools and spas.

It is also possible for the formulation in accordance with either aspect of the invention to include a filler. The filler is an inert substance, such as sodium chloride or boric acid, that can be used to assist in the tablettability as a composition. A filler can be used in any concentration provided the composition contains the required amount of the disinfectant. The filler is preferably present in an amount of from 5-10% by weight.

In addition to the components of the disinfectant described above, the formulations may also contain other ingredients, such as tabletting aids, eg, mold release agent, binders, corrosion inhibitors, scale inhibitors and other components known to one skilled in the art. The tablets, sticks or pucks are formed in the usual manner.

The following specific Examples are intended to illustrate the invention by way of example only:-

### Example 1

Tablets of disinfectant for this test were prepared by mixing the ingredients and pressing in a conventional tablet machine to form tablets one inch (2.5 cm) in diameter. Sticks were prepared by mixing the ingredients and forming under pressure in a conventional stick-forming machine to form half pound (0.23 kg) sticks.

Trichloro-s-triazinetrione in an amount of 96% by weight was mixed with sodium bromide in an amount of 4% by weight and formed into sticks and tablets. A second disinfecting composition was prepared composed of 96% by weight trichloro-s-triazinetrione and 4% potassium bromide and formed into sticks and tablets.

These two compositions were compared by placing them in a commercially available erosion control device through which water was circulated at a controlled rate of gallons per hour (gph). Water temperature was maintained at 80-81°F (26.7-27.2°C). Total alkalinity of the water was controlled at 100 parts per million. The calcium hardness was at 200-300 parts per million. The pH was at 7.4 to 7.6. Tablets or sticks were put in a release device and allowed to operate until the output had stabilized. The following tables show the results.

**Table 1**

| Column 1 | Column 2 | Column 3 | Column 4 | Column 5 |
|---|---|---|---|---|
| Flow Rate | 1" tablets 96% T.C.C.A. 4% KBr lbs Cl₂ per 8 hours | 1" tablets 96% T.C.C.A. 4% KBr lbs Br₂ per 8 hours | 0.5 lb Stick 96% T.C.C.A. 4% KBr lbs Cl₂ per 8 hours | 0.5 lb Stick 96% T.C.C.A. 4% KBr lbs Br₂ per 8 hours |

| gph (l/h) | | | | |
|---|---|---|---|---|
| 10 (45.4) | 0.96 [0.44] | (2.2) [1.00] | 0.35 [0.16] | (0.79) [0.36] |
| 20 (90.7) | 1.2 [0.54] | (2.8) [1.27] | 0.46 [0.21] | (1.0) [0.45] |
| 30 (136.1) | 1.6 [0.73] | (3.6) [1.63] | 0.52 [0.24] | (1.2) [0.54] |
| 40 (181.4) | 1.9 [0.86] | (4.2) [1.91] | 0.59 [0.27] | (1.3) [0.58] |
| 50 (226.8) | 2.2 [1.00] | (4.9) [2.22] | 0.69 [0.31] | (1.6) [0.73] |
| **Note:** (i) 1 inch = 2.5 cm (ii) 0.5 lb = 0.23 kg (iii) The figures in square brackets in columns 2, 3, 4 and 5 of Tables 1 and 2 are the release rates expressed in kg per 8 hours. | | | | |

**Table 2**

| Column 1 | Column 2 | Column 3 | Column 4 | Column 5 |
|---|---|---|---|---|
| Flow Rate | 1" tablet 96% T.C.C.A. 4% NaBr lbs Cl₂ per 8 hours | 1"tablet 90% T.C.C.A. 4% NaBr lbs Br₂ per 8 hours | 0.5 lb Stick 96% T.C.C.A. 4% NaBr lbs Cl₂ per 8 hours | 0.5 lb Stick 96% T.C.C.A. 4% NaBr lbs Br₂ per 8 hours |

| gph (l/h) | | | | |
|---|---|---|---|---|
| 10 (45.4) | 1.1 [0.50] | (2.5) [1.13] | 0.14 [0.06] | (1.0) [0.45] |
| 20 (90.7) | 1.5 [0.68] | (3.3) [1.50] | 0.58 [0.26] | (1.3) [0.58] |
| 30 (136.1) | 1.8 [0.82] | (4.0) [1.81] | 0.67 [0.30] | (1.5) [0.68] |
| 40 (181.4) | 2.1 [0.95] | (4.8) [2.18] | 0.80 [0.36] | (1.8) [0.82] |
| 50 (226.8) | 2.5 [1.13] | (5.7) [2.59] | 0.90 [0.41] | (2.0) [0.91] |
| **Note:** (i) 1 inch = 2.5 cm (ii) 0.5 lb = 0.23 kg (iii) The figures in square brackets in columns 2, 3, 4 and 5 of Tables 1 and 2 are the release rates expressed in kg per 8 hours. | | | | |

In comparing the 1" (2.5 cm) tablet with KBr with those with NaBr, it will be noticed the mass of chlorine released in an eight hour period is significantly less with the KBr than with the NaBr formulations. For example at a flow rate of 20 gallons per hour (90.7 l/h), the output rate of the formulation with the KBr is approximately 20% less than with NaBr. At 50 gallons per hour (226.8 l/h), the release of chlorine for eight hours is approximately 12% less with the KBr than with the NaBr. In comparing the sticks, it will be noticed that the release rate for the chlorine for eight hours is significantly less for the KBr formulation than for the NaBr formulation. For example at a flow rate of 40 gallons per hour (181.4 l/h), the output of chlorine for eight hours is approximately 26% less for the KBr than for the NaBr.

The bromine output for eight hours is also significantly less for sticks and tablets formed with KBr than those formed with NaBr. For example at a flow rate of 20 gallons per hour (90.7 l/h), the bromine output rate for the tablets formed with KBr was approximately 15% less than with the NaBr. The bromine output rate for these tablets at a flow rate of 50 gallons per hour (226.8 l/h) was 14% less for the KBr tablets than for the NaBr containing tablets. The output rate was 20% less for the KBr sticks at 30 gallons per hour (136.1 l/h) than for the NaBr sticks.

### Example 2

Tablets and sticks of 100% trichloro-s-triazinetrione were prepared in accordance with the procedure of Example 1 and tested in the same manner. The following table shows the results.

**Table 3**

| Column 1 | Column 2 | Column 3 | Column 4 | Column 5 |
|---|---|---|---|---|
| Flow Rate | 1" tablets 100% T.C.C.A. lbs Cl per 8 hours | 1" tablets 100% T.C.C.A. lbs Br per 8 hours | 0.5 lb stick 100% T.C.C.A. lbs Cl per 8 hours | 0.5 lb stick 100% T.C.C.A. lbs Br per 8 hours |

| gph (l/h) | | | | |
|---|---|---|---|---|
| 10 45.4 | 1.1 [0.50] | (2.5) [1.13] | 0.32 [0.15] | (0.72) [0.33] |
| 20 (90.7) | 1.7 [0.77] | (3.8) [1.72] | 0.40 [0.18] | (0.90) [0.41] |
| 30 (136.1) | 2.0 [0.91] | (4.5) [2.04] | 0.48 [0.22] | (1.1) [0.50] |
| 40 (181.4) | 2.3 [1.04] | (5.2) [2.36] | 0.56 [0.25] | (1.3) [0.59] |
| 50 (226.8) | 2.8 [1.27] | (6.3) [2.86] | 0.64 [0.29] | (1.4) [0.64] |
| **Note:** (i) 1 inch = 2.5 cm (ii) 0.5 lb = 0.23 kg (iii) The figures in square brackets in columns 2, 3, 4 and 5 of Table 3 are the release rates expressed in kg per 8 hours. | | | | |

In comparing the 1" (2.5 cm) tablet with 96% TCCA and 4% NaBr (Table 1) with 100% TCCA (Table 3), it will be noticed that the mass of chlorine released in an eight hour period is significantly less than with TCCA alone. For example, at a flow rate of 20 gallons per hour (90.7 l/h) the KBr tablets had a chlorine output rate that was 29% less than that of the TCCA tablet alone. The KBr sticks (Table 1) at a flow rate of 20 gallons per hour (90.7 l/h) had a chlorine output rate that was only 13% more than that of the TCCA tablets (Table 2). The bromine output rate with a 1" (2.5 cm) tablet at a flow rate of 40 gallons per hour (181.4 l/h) was 19% less with the KBr tablet (Table 1) than with the TCCA tablets (Table 3).

### Example 3

The disinfectant composition was prepared by mixing the following ingredients in accordance with the following formulation: TCCA 95.8%, KBr 4%, Lazurite .2%. These compositions were blended until a uniform blue mixture was obtained. These compositions were stored using a thirty day accelerated stability testing method at 50°C. Compositions remained blue at the conclusion of the test.

The stability of the pigment in water containing an oxidizer was measured in accordance with the following procedure: 0.5 gm of the composition was added to 1000 gm of distilled water. An additional 0.1 gm of Lazurite was added for visual effect. These mixtures were allowed to mix over a 24 hour period. The color of the water immediately upon adding the composition was blue, but the water became colorless after 1½ hours and remained so at the end of the 24 hour period.

## Claims

1. A solid disinfecting composition for disinfecting water systems and comprising a mixture of trichloro-s-triazinetrione in an amount of from 80% to 99% by weight of the mixture and potassium bromide in an amount of from 1 % to 20% by weight of the mixture, said composition providing a prolonged and controlled release of hypobromous acid when immersed in water.

2. A composition as claimed in claim 1 wherein the trichloro-s-triazinetrione is present in an amount from 90% to 97% by weight of the mixture and the potassium bromide is present in an amount of from 3% to 10% by weight of the mixture.

3. A composition as claimed in claim 1 or claim 2, which further comprises an inert filler.

4. A composition as claimed in claim 3, wherein the inert filler is in an amount of from 5% to 10% by weight of the composition.

5. A blue pigmented disinfectant composition comprising from 99.5% to 99.99% by weight of a composition as defined in any of claims 1 to 4 in admixture with from 0.01% to 0.5% by weight of lazurite.

6. A composition as claimed in claim 5 wherein the trichloro-s-triazinetrione is present in an amount from 90-97% by weight and the potassium bromide is present in an amount from 2.99%-9.5% by weight and lazurite is present in an amount from 0.01-.5% by weight.

7. A composition as claimed in claim 5 or claim 6, wherein the lazurite is present in an amount of from 0.05-0.25% by weight.

8. The use of a composition of any of claims 1 to 7 to disinfect a swimming pool, spa or other water system.

## Patentansprüche

1. Feste desinfizierende Zubereitung zum Desinfizieren von Wassersystemen, umfassend eine Mischung aus Trichlor-s-triazintrion in einer Menge von 80 Gew.-% bis 99 Gew.-% der Mischung und Kaliumbromid in einer Menge von 1 Gew.-% bis 20 Gew.-% der Mischung, wobei die Zubereitung für eine sich über längere Zeit erstreckende und geregelte Freisetzung von hypobromiger Säure bei Eintauchen in Wasser sorgt.

2. Zubereitung nach Anspruch 1, worin das Trichlor-s-triazintrion in einer Menge von 90 Gew.-% bis 97 Gew.-% der Mischung zugegen ist und das Kaliumbromid in einer Menge von 3 Gew.-% bis 10 Gew.-% der Mischung zugegen ist.

3. Zubereitung nach Anspruch 1 oder Anspruch 2, welche außerdem einen inerten Füllstoff umfaßt.

4. Zubereitung nach Anspruch 3, worin der inerte Füllstoff in einer Menge von 5 Gew.-% bis 10 Gew.-% der Zubereitung vorliegt.

5. Blau gefärbte Desinfektionsmittel-Zubereitung, umfassend 99,5 Gew.-% bis 99,99 Gew.-% einer Zubereitung, wie sie in einem der Ansprüche 1 bis 4 definiert ist, in Abmischung mit 0,01 Gew.-% bis 0,5 Gew.-% Lazurite.

6. Zubereitung nach Anspruch 5, worin das Trichlor-s-triazintrion in einer Menge von 90 bis 97 Gew.-% zugegen ist, das Kaliumbromid in einer Menge von 2,99 Gew.-% bis 9,5 Gew.-% zugegen ist und Lazurite in einer Menge von 0,01 bis 0,5 Gew.-% zugegen ist.

7. Zubereitung nach Anspruch 5 oder Anspruch 6, worin das Lazurite in einer Menge von 0,05 bis 0,25 Gew.-% zugegen ist.

8. Verwendung einer Zubereitung nach einem der Ansprüche 1 bis 7 zum Desinfizieren eines Schwimmbads, Mineralbads oder anderen Wassersystems.

## Revendications

1. Composition désinfectante solide pour désinfecter des systèmes aqueux et comprenant un mélange de trichloro-s-triazinetrione à raison de 80% à 99% en poids du mélange et du bromure de potassium à raison de 1% à 20% en poids du mélange, ladite composition fournissant une libération prolongée et régulée d'acide hypobromeux quand il est immergé dans l'eau.

2. Composition selon la revendication 1, dans laquelle la trichloro-s-triazinetrione est présente à raison de 90% à 97% en poids du mélange et le bromure de potassium est présent à raison de 3% à 10% en poids du mélange.

3. Composition selon la revendication 1 ou 2, qui comprend de plus un agent de charge inerte.

4. Composition selon la revendication 3, dans laquelle l'agent de charge inerte est présent en une quantité de 5% à 10% en poids de la composition.

5. Composition désinfectante pigmentée en bleu comprenant de 99,5% à 99,9% en poids d'une composition définie selon l'une quelconque des revendications 1 à 4 en mélange avec 0,01% à 0,5% en poids de lazurite.

6. Composition selon la revendication 5, dans laquelle la trichloro-s-triazinetrione est présente à raison de 90 à 97% en poids et le bromure de potassium est présent à raison de 2,99% à 9,5% en poids et la lazurite est présente à raison de 0,01 à 0,5% en poids.

7. Composition selon la revendication 5 ou 6, dans laquelle la lazurite est présente à raison de 0,05 à 0,25% en poids.

8. Utilisation d'une composition selon l'une quelconque des revendications 1 à 7 pour désinfecter une piscine, un bain bouillonnant ou un autre système aqueux.
